(19)

Europäisches Patentamt

European Patent Office

Office européen des brevets

(11) **EP 3 023 907 A1**

(12) **EUROPEAN PATENT APPLICATION**

(43) Date of publication:
**25.05.2016 Bulletin 2016/21**

(51) Int Cl.:
**G06K 9/00** (2006.01)

(21) Application number: **14194148.4**

(22) Date of filing: **20.11.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Autoliv Development AB**
**447 83 Vårgårda (SE)**

(72) Inventors:
- **Murray, Shane Michael**
  **Wilmington, MA Massachusetts 01887 (US)**
- **Nordqvist, Ulf Lennart**
  **Yokohama-shi, Kanagawa 220-0012 (JP)**

(74) Representative: **Kransell & Wennborg KB**
**P.O. Box 27834**
**115 93 Stockholm (SE)**

(54) **Gradient detection based on perspective-transformed image**

(57) The invention relates to a method and a system (100) at a vehicle (105) of determining gradient of a road surface (201) on which the vehicle travels. The invention further relates to a computer program performing the method according to the present invention, and a computer program product comprising computer readable medium having the computer programs embodied therein.

A method at a vehicle (105) of determining gradient of a road surface (201) on which the vehicle travels is provided. The method comprises capturing (S101) at least one image (202) of the road surface, transforming (S102) a perspective of the at least one captured image, and detecting (S103) the road surface in the perspective-transformed image (203). Further, the method comprises determining (S104), in the perspective-transformed image (203), a width ($B_T$) of the road surface (201) distal of the vehicle (105) and a width (AT) of the road surface (201) proximate to the vehicle (105), comparing the width ($B_T$) of the road surface (201) distal of the vehicle with the width (AT) of the road surface (201) proximate to the vehicle (105). From the comparison, the method determines the gradient of the road surface (201).

Fig. 1

EP 3 023 907 A1

Description

TECHNICAL FIELD

The invention relates to a method and a system at a vehicle of determining gradient of a road surface on which the vehicle travels. The invention further relates to a computer program performing the method according to the present invention, and a computer program product comprising computer readable medium having the computer programs embodied therein.

BACKGROUND

In the art, object detection is useful for automotive vehicles such as cars, trucks, motor cycles, etc., for detecting obstacles in the form of for instance pedestrians, other vehicles and trees in a vicinity of the vehicle, thereby avoiding accidents.

Such prior art object detection is typically attained by using cameras and/or radars or ultrasonic sensors for detecting obstacles and evaluating the detected obstacles to provide a collision warning or even to activate a countermeasure element such as an airbag of the vehicle or to provide steering or brake control. Typically, a collision warning is provided in response to which a driver of the vehicle accordingly can take decisions on how to navigate the vehicle to avoid an accident. An object detection device is typically located at a front end of the vehicle for forward detection, but can further as a supplement be arranged at a back end of the vehicle for rearward detection.

Moreover, it may be desirable to perform lane detection in order to determine when a vehicle is departing from a current lane. US 7,898,400 discloses a lane detection system using a camera to provide a vehicle position signal and a preceding lane structure corresponding to a direction of the lane in front of the vehicle in order to determine if the vehicle is departing, or is about to depart, from the lane and generate a warning signal to alert the driver accordingly. Further, the system of US 7,898,400 is capable of determining whether the preceding lane structure of the road is oriented uphill or downhill based on widening or narrowing of a distance between left and right lane demarcations, i.e. based on a determined lane width. However, it is difficult to determine the lane width if the lane width is located on a distance from the vehicle.

SUMMARY

An object of the present invention is to solve, or at least mitigate, this problem in the art and to provide an improved method and system for determining gradient of a road surface on which the vehicle travels.

This object is attained in a first aspect of the present invention by a method at a vehicle of determining gradient of a road surface on which the vehicle travels. The method comprises capturing at least one image of the road surface, transforming a perspective of the at least one captured image, and detecting the road surface in the perspective-transformed image. Further, the method comprises determining, in the perspective-transformed image, a width of the road surface distal of the vehicle and a width of the road surface proximate to the vehicle, comparing the width of the road surface distal of the vehicle with the width of the road surface proximate to the vehicle. From the comparison, the method determines the gradient of the road surface.

This object is attained in a second aspect of the present invention by a system at a vehicle for determining a gradient of a road surface on which the vehicle travels. The system comprises a camera configured to capture at least one image of the road surface, a processor, and a memory containing instructions executable by the processor, whereby the system is operative to transform a perspective of the at least one captured image, detect the road surface in the perspective-transformed image, and determine, in the perspective-transformed image, a width of the road surface distal of the vehicle and a width of the road surface proximate to the vehicle. The system is further operative to compare the detected width of the road surface distal of the vehicle with the detected width of the road surface proximate to the vehicle, and determine, from the comparison, the gradient of the road surface. Advantageously, with the proposed invention, by using a perspective-transformed representation of a captured image of a vicinity of the vehicle, it is easier to determine a width of a road surface detected in the perspective-transformed image, which is located far from the vehicle, since the perspective transform effectively normalises the width of road surface in the perspective transformed image in that for example size of road markings is made constant for a flat road with an ideal, "perfect" perspective transform, which also makes it easier to calibrate the perspective transform based on a flat road surface. If a perspective-transformation is performed representing a bird's eye view of the road surface in front of the vehicle, the detected road surface distal of the vehicle will be stretched out as compared to a correspondingly detected distal road surface in the original image.

Thus, an image is captured by a camera typically located in a front end of the motor vehicle, being exemplified in the following by a car. A processor performs a perspective-transform on the captured image, and analyses the perspective-transformed image to detect an object in the form of a road surface in the image. In practice, a large number of images are typically captured and analysed. The processor may for instance map an identified road surface in a perspective-transformed image with a number of shapes and forms being pre-stored in a database to which the processor has access. Hence, image data extracted from the captured image is compared to pre-stored template data in order to detect a road surface in the perspective-transformed image. If there is a match in the comparison between the extracted image data and the template data, the template data is in fact considered to constitute the detected object. The object detection is typically complemented with techniques such as edge detection, e.g. so called Canny edge detection, and feature extraction techniques such as Hough transform.

Further, the processor determines a width of the road surface distal of the vehicle and a width of the road surface proximate to the vehicle in the perspective-transformed image, and compares the width of the road surface distal of the vehicle with the width of the road surface proximate to the vehicle. From this comparison, the gradient of the road surface is determined.

For instance, in case of a declining road surface, the determined distal width is located further away from the camera as compared to a determined distal width for a flat road surface. As compared to the originally captured image, the transform will extend the distal width over the same number of image pixels, which will have as an effect that the accuracy in determining the distal width advantageously increases, since the transform results in an increased number of units of length per pixel for the distal width. Further advantageous is that the detection of the road surface becomes more accurate as a distal section of the road surface is stretched out along an x-axis of the perspective-transformed image.

Further provided are a computer program performing the method according to the present invention, and a computer program product comprising computer readable medium having the computer programs embodied therein.

Preferred embodiments of the present invention as defined by the dependent claims will be discussed in the following.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

BRIEF DESCRIPTION OF THE DRAWINGS

The invention is now described, by way of example, with reference to the accompanying drawings, in which:

Figure 1 shows a system at a vehicle for determining gradient of a road surface on which the vehicle travels in accordance with an embodiment of the present invention;

Figure 2 shows an illustration of how a perspective of a captured image is transformed from one perspective to another;

Figure 3 illustrates a captured image, detected objects in the captured image,

and a perspective-transform of the captured image;

Figure 4 shows captured images with and without perspective transform;

Figure 5 shows a flowchart illustrating an embodiment of a method of the present invention, which flowchart further is accompanied by images; and

Figure 6 illustrates a further embodiment of the present invention.

**DETAILED DESCRIPTION**

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

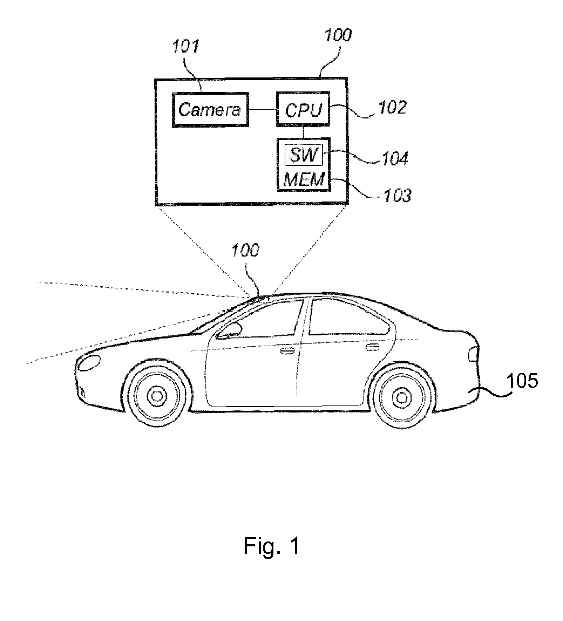

Figure 1 illustrates a system for determining gradient of a road surface on which a vehicle travels in accordance with an embodiment of the present invention. The system 100 for gradient of a road surface is a vision system comprising an imaging sensor in the form of a video camera 101 utilized to capture images of a surrounding of the motor vehicle being for instance a car 105. The system may for instance be placed in a ceiling of the car 105 close to a front windshield. The camera 101 continuously captures images of the surroundings and supplies image data to a processing device 102 configured to subsequently identify objects in the captured images. In the present invention, an object in the form of a road surface in front of the car 105 is to be detected. It should be understood that the system 100 further is capable of detecting other objects such as cars, trucks, pedestrians, trees, etc.

The camera 101 comprises a sensor array that produces image data that is processed by the processing device 102 to generate depth maps of the vicinity of the car such that detected object such as a road surface subsequently can be mapped to a real-world coordinate system. The depth maps are processed and compared to pre-rendered templates of target objects that could appear in the surroundings of the car. Theses target object templates are stored in a memory 103 operatively coupled to the processing device 102.

A target list may be produced by the processing device 102 matching the pre-rendered templates to the depth map image data. The system processes the target list to produce target size and classification estimates. The target is then tracked as it moves and the target position, classification and velocity are determined.

A classification system is used for classifying detected objects in the vicinity of the car, such as the road surface, trucks, cars, motorcycles, pedestrians, etc. The processing device 102 may thus classify the detected objects and provide an output relating to the type of object that appears in the image data captured by the camera 101. The processing device 102 may be trained with exposure to many different types of objects from many different points of view, so that it is able to make an accurate determination as to the type of object that is detected. Known types of objects can be stored in a database for future reference. Calibration must typically be performed with respect to known references. For instance, if a gradient of a road is to be detected, the system will need to know how a road with a zero gradient (i.e. a flat road) looks like. As will be discussed subsequently, the perspective transform performed in the embodiments of the present invention will provide for a more accurate calibration due to a normalizing effect of the transform.

If there is a match in the comparison between the extracted image data and the template data, the template data is in fact considered to constitute the detected object. The object detection is typically complemented with techniques such as edge detection, e.g. so called Canny edge detection, and feature extraction techniques such as Hough transform. The object in the captured image is considered to correspond to one of the pre-stored object with a certain probability, and an object is thus considered to have been detected in the captured image. The best match can be determined by applying known statistical methods such as image cross correlation, or singular value decomposition.

In an embodiment of the present invention, the camera 101 captures an image of the vicinity of the car. Thereafter, the processing device 102 transforms a perspective of the captured image, i.e. the captured image is transformed from a first coordinate system to a second, perspective-transformed coordinate system. The processing device 102 then performs object detection on the perspective-transformed image with the aim to detect the road surface on which the car 105 travels. From the detected road surface, the processing device 102 determines a width of the road surface distal of the car 105 as well a width of the road surface proximal to the car 105. By comparing the distal road width to the proximal road width, the gradient of the road surface can be determined

Optionally, a driver of the car may be informed of the result, i.e. if the road is oriented uphill or downhill, by means of an audio and/or visual indication, or sent to another Driver Assistance System such as Active Emergency Braking or Adaptive Cruise Control. Further, the image data pertaining to the detected road surface may be stored as template data in the memory 103 for future use.

With further reference to Figure 1, in the object detection system 100, the processing device 102 performs the method according to embodiments of the present invention by controlling the camera 101 accordingly. This processing device 102 is typically embodied in the form of one or more microprocessors arranged to execute a computer program 104 downloaded to the storage medium 103 associated with the microprocessor, such as a Random Access Memory (RAM), a Flash memory or a hard disk drive. The processing device 102 is arranged to carry out the method according to embodiments of the present invention when the appropriate computer program 104 comprising computer-executable instructions is downloaded to the storage medium 103 and executed by the processing unit 102. The storage medium 103 may also be a computer program product comprising the computer program 104. Alternatively, the computer program 104 may be transferred to the storage medium 103 by means of a suitable computer program product, such as a Digital Versatile Disc (DVD) or a memory stick. As a further alternative, the computer program 104 may be downloaded to the storage medium 103 over a network. The processing unit 102 may alternatively be embodied in the form of a digital signal processor (DSP), an application specific integrated circuit (ASIC), a field-programmable gate array (FPGA), a complex programmable logic device (CPLD), etc.

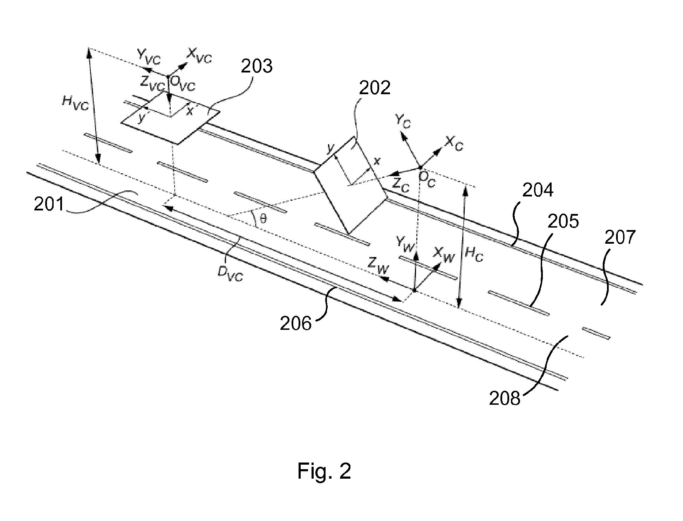

Figure 2 shows an illustration of how a perspective of a captured image 202 is transformed from one perspective (i.e. that of the originally captured image) to another 203 (i.e. to that of the perspective-transformed image). The coordinate-system denoted $(O_w, X_w, Y_w, Z_w)$ represents vehicle coordinates, while $(O_c, X_c, Y_c, Z_c)$ represents the camera-view coordinates. As can be deducted from Figure 2, the illustrated camera-view is accomplished e.g. by placing the camera in a ceiling of a car close to a front windshield of the car as previously illustrated in Figure 1. Hence, with reference to Figure 2, the camera is located on a distance $H_c$ above a road surface 201 and an optical axis of the camera incides with the road surface 201 at an angle $\theta$.

When the viewpoint $O_c$, whose location is $(t_x, t_y, t_z)$, rotates with angle $\theta$ about axis $X_w$, by angle $\rho$ about axis $Y_w$, and by angle $\varphi$ about axis $Z_w$, the relation between the vehicle-coordinate system and the camera-coordinate system is:

$$[X_c \; Y_c \; Z_c]^T \;=\; R_z R_y R_x [X_w - t_x \; Y_w - t_y \; Z_w - t_z]^T$$

where

$$R_x = \begin{bmatrix} 1 & 0 & 0 \\ 0 & cos\theta & sin\theta \\ 0 & -sin\theta & cos\theta \end{bmatrix}, R_y = \begin{bmatrix} cos\rho & 0 & -sin\rho \\ 0 & 1 & 0 \\ sin\rho & 0 & cos\rho \end{bmatrix}$$

$$R_z = \begin{bmatrix} cos\varphi & sin\varphi & 0 \\ -sin\varphi & cos\varphi & 0 \\ 0 & 0 & 1 \end{bmatrix}$$

The transformation between $O_c$, $X_c$, $Y_c$ and $Z_c$ and the plane x and y of the captured image 202 can be expressed by using a focal length f of the camera:

$$x = \frac{fX_c}{Z_c} \; , y = \frac{fY_c}{Z_c}$$

Further with reference to Figure 2, the coordinate-system denoted $(O_{vc}, X_{vc}, Y_{vc}, Z_{vc})$ represents transformed camera-view coordinates. That is, a perspective-transformation of the captured image 202 will result in the transformed image 203. When the transformed viewpoint $O_{vc}$ is located at $(0, H_{vc}, D_{vc})$, the transformed, or virtual, camera-view coordinates $(O_{vc}, X_{vc}, Y_{vc}, Z_{vc})$ can be calculated from the vehicle coordinates, and the transformed (virtual) image plane coordinates x' and y' from the transformed camera-view coordinates. It is assumed that all objects projected onto the image plane are projected on the roadway plane whose $Y_w$ is zero. These objects are considered to be planar objects. The originally captured image 202 can thus be perspective-transformed into image 203 as:

$$x' = \frac{f'}{H_{vc}} \cdot \frac{H_c x}{f sin\theta - y cos\theta}$$

$$y' = \frac{f'}{H_{vc}} \cdot \left\{ \frac{H_c(f cos\theta + y sin\theta)}{f sin\theta - y \, cos\theta} - D_{vc} \right\},$$

where f is the focal length of the "transformed" camera. As can be deducted from Figure 2, the perspective-transformed image 203 in this particular example results in a bird's eye view of the roadway 301 (and any object located on the roadway). Further illustrated in Figure 2 are road side

markings 204, 206 and centre ling marking 205, where the right-hand side marking 204 and the centre line 205 demarcates a right-hand lane 207, while the left-hand side marking 206 and the centre line 205 demarcates a left-hand lane 208.

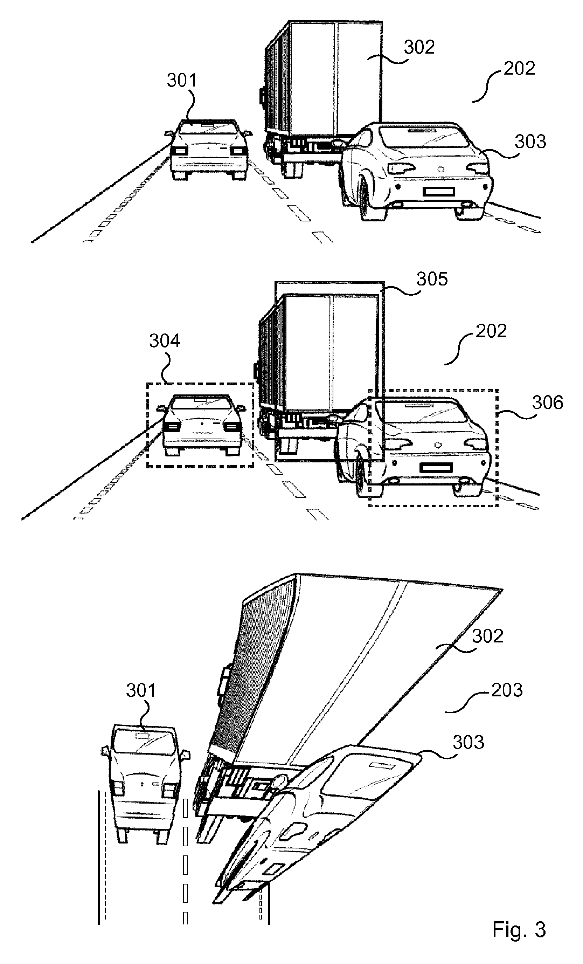

Figure 3 illustrates in an exemplifying manner the originally captured image 202 which contains three objects to potentially be detected, in the form of two cars 301, 303 and one truck 302. In the art, object detection is performed on the captured image 202. A common method used is to have the processor 102 of Figure 1 extract image data from the captured image and compare the extracted data with template data pre-stored in the memory 103, which template data represents a know shape and form. In this particular example, the left-most car 301, the truck 302 and the right-most car 303 is matched to a rectangle 304, 305 and 306, respectively. Thus, three objects have been detected in the captured image. Further, as was discussed in detail in Figure 2, a perspective-transform can be performed on the originally captured image 202, resulting in the perspective-transformed image 203. As can be seen in the illustration of Figure 3, the proportions of the originally captured image 202 become rather different in the perspective-transformed image 203 (even though not a full bird's eye view is provided as in the illustration of Figure 2).

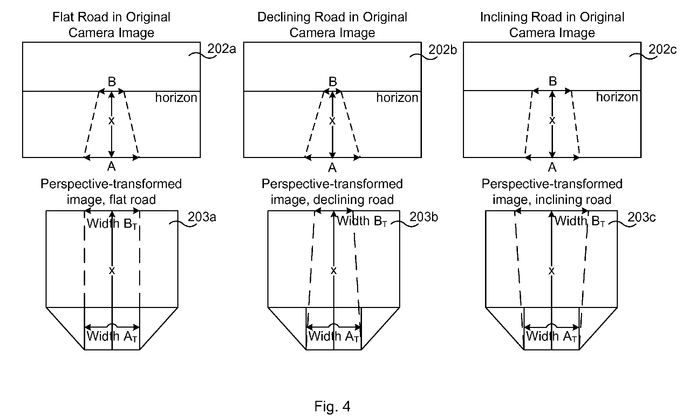

Figure 4 shows three captured images 202a, 202b and 202c illustrating a flat road, a declining road and an inclining road, respectively. Further shown are the perspective transform 203a, 203b and 203c of each captured image 202a, 202b and 202c, respectively.

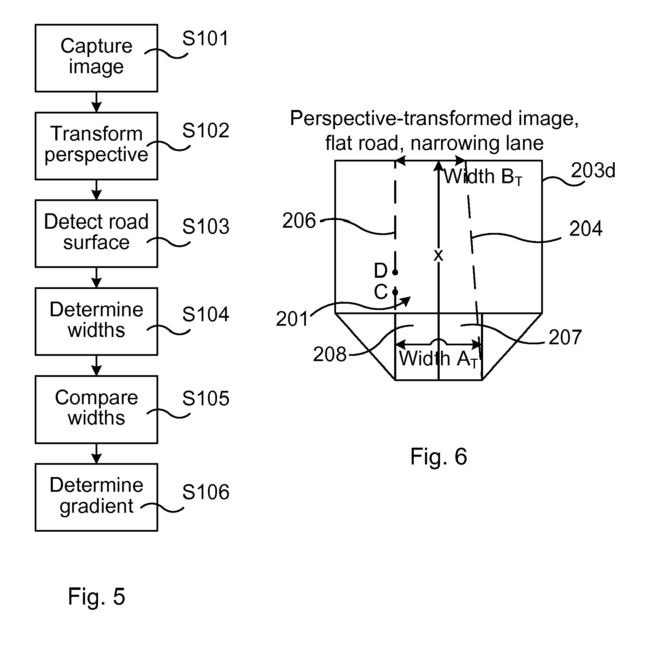

Figure 5 shows a flowchart illustrating an embodiment of the method of determining gradient of a road surface on which a vehicle travels according to the present invention. Reference is further made to Figure 1 for structural elements. In a first step S101, the processing device 102 controls the camera 101 to capture images of the vicinity of the car 105 on which the object detection system 100 is mounted. As is illustrated in Figure 4 in originally captured image 202a showing a flat road surface 201, a width of the road surface 201 proximal to the car 105 is denoted A, while a width of the road surface 201 distal of the car 105, for instance at the horizon in the image 202a, i.e. on a distance x from the car 105, is denoted B. Thus, a flat road surface 201 will result in a certain relationship between the distal width B and the proximal width A.

Further, as is shown in image 202b, illustrating a declining road surface 201 - i.e. the car is (or will be) going downhill - another relationship between the distal width B and the proximal width A prevails, since the determined distal width B is located further away from the camera 101 as compared to the determined distal width in the first image 202a. As can be seen, the distal width B decreases for a declining road surface 201.

With reference to image 202c illustrating an inclining road surface 201 (i.e. the car is going uphill), still another relationship between the distal width B and the proximal width A prevails, since the determined distal width B is located closer to the camera 101 as compared to the determined distal width B in the first image 202a resulting in an increasing distal width B for an inclining road surface 201.

As can be deducted from the three images 202a, 202b and 202c, it is possible to determine a gradient of the road surface 201 by detecting the road surface 201 and determining the distal width B and the proximal width A.

Now, as the distal width B of the road surface 201 decreases the further away from the car 105 the distal width is determined (i.e. at a greater distance x), the width B is difficult to determine with good accuracy, and the determination of the gradient thus becomes inexact. For a slight incline/decline, it may be necessary to measure the distal width B at a great distance x from the car 105 in order to be able to determine the gradient of the road surface 201.

By utilizing the perspective transform of the present invention, an object located on a distance from (or close to) the car 105, would occupy a same number of pixels in the perspective-transformed image 203. Reference may for instance be made to the perspective-transformed image 203 in Figure 2, where the size of the centre line road markings is constant. Hence, geometry of objects, in this particular example the centre road markings, are normalized to compensate for distortion caused by the distance from the camera 101.

If the object is further away, the effect of the normalization performed by the perspective transform is greater. By normalising the shape of the objects via the perspective transform before detecting their width, changes in shape are easier to detect.

Hence, in a second step S102, a perspective of the captured image 202 is transformed by the processing device 102, resulting in the perspective-transformed image 203, and the road surface is subsequently detected in the perspective-transformed image 203 in step S103.

For an object of size S in the originally captured image 202, the object size $S_T$ in terms of pixels in the perspective-transformed image 203 will be:

$$S_T = G \times S,$$

where G is a variable calculated via the perspective transform. Therefore, an object will be enlarged with factor G in the perspective-transformed image 203 as compared to in the originally captured image 202, thereby advantageously making the object easier to detect, and thus providing a more accurate and reliable detection of the object. As a result, due to the normalizing effect of the perspective transform, an object (such as a road marking) will have the same size in pixels whether or not it is close or far away.

As is illustrated in the perspective-transformed image 203a showing a flat road surface 201 (the image 203a being a perspective-transformed representation of the originally captured image 202a), a width of the road surface 201 proximal to the car 105 is denoted $A_T$, while a width of the road surface 201 distal of the car 105, for instance at the horizon in the image 203a, i.e. on a distance x from the car 105, is denoted $B_T$, both of which widths are determined in step S104. Thus, a flat road surface 201 will result in a certain relationship between the distal width $B_T$ and the proximal width $A_T$ in the perspective-transformed image 203a. Parameters of the transform performed on the originally captured image 202a can be adjusted such that a completely flat road will result in a 1:1 relationship for distal width $B_T$ and proximal width $A_T$. As can be seen, similar to the illustration in Figure 2, the perspective-transformed image 203a is a bird's eye view of the objects in front of the car 105.

Further, as is shown in image 203b, illustrating a declining road surface 201, another relationship between the distal width $B_T$ and the proximal width $A_T$ prevails, since the determined distal width $B_T$ is located further away from the camera 101 as compared to the determined distal width in the first image 203a. However, as compared with the originally captured images 202a and 202b, the transform will extend the distal width $B_T$ over the same number of image pixels, which will have as an effect that the accuracy in determining the distal width $B_T$ advantageously increases, since the transform results in an increased number of units of length per pixel for the distal width $B_T$. Further advantageous is that the detection of the road surface 201 becomes more accurate as a distal section of the road surface 201 is stretched out along the x-axis of the perspective-transformed image 203 (i.e. along the axis x' in Figure 2). Hence, as can be seen, the distal width $B_T$ decreases for a declining road surface 201, but not to the same extent as the distal width B in the originally captured image 202b. Advantageously, as has been discussed hereinabove, the normalizing effect of the perspective transform provides for easier detection of changes in road surface features and thus brings about more accurate and reliable detection and, consequently, provides for a more accurate determination of the gradient of the road.

With reference to image 203c illustrating an inclining road surface 201, the determined distal width $B_T$ is located closer to the camera 101 as compared to the determined distal width $B_T$ in the first image 203a, resulting in an increase of the distal width $B_T$ for an inclining road surface 201.

Hence, in a further step S105, the processing device 102 compares the detected width $B_T$ of the road surface 201 distal of the car 105 with the detected width $A_T$ of the road surface proximate to the car in the perspective-transformed images 203. In the three exemplifying perspective-transformed images 203a, 203b and 203c of Figure 4, it can be seen that:

$$\frac{B_T}{A_T} = 1,$$

for a flat road surface,

$$\frac{B_T}{A_T} < 1,$$

for a declining road surface, and

$$\frac{B_T}{A_T} > 1,$$

for an inclining road surface.

The exact value of the ratio between the distal width $B_T$ and the proximal width $A_T$ can be used to determine the decline/incline of the gradient of the road surface 201. For instance, a value of 1.3 indicates a steeper uphill gradient as compared to a value of 1.1, while a value of 0.5 indicates a steeper downhill gradient as compared to a value of 0.8. In a final step S106, the gradient of the road surface 201 is determined by comparing the distal width $B_T$ with the proximal width $A_T$ in the perspective-transformed images 203a, 203b, and 203c.

In an embodiment of the present invention, parameters of the transform performed (as discussed in detail in Figure 2) on the originally captured image 202 can be calibrated to a know reference gradient. As previously was mentioned with reference to Figure 5, parameters of the transform performed on the originally captured image 202 can be adjusted such that a completely flat road will result in a 1:1 relationship for distal width $B_T$ and proximal width $A_T$ in the perspective-transformed image 203. In practice, the known reference gradient could be a gradient with any incline/decline, but in an embodiment, the reference gradient is a flat road (i.e. the reference gradient being zero). Advantageously, the calibration to a flat road is easier in a perspective-transformed image due the normalizing effect of the perspective transform. Hence, with the performed perspective transform on the originally captured image, lane width and lane marker size will be constant over distance, thereby making the calibration more straightforward.

Again with reference to Figure 2, the detection of the road surface 201 is in an embodiment performed by detecting road side markings 204 and 206, which road side markings demarcate the road surface. In a further embodiment, one or both lanes 207, 208 are detected by detecting the right-hand side marking 204 and the centre line 205, and the left-hand side marking 206 and the centre line 205, respectively.

In yet a further embodiment, with reference to Figure 6 illustrating a further perspective-transformed image 203d capturing a flat road 201 where the right-hand lane 207 is narrowing. In this exemplifying embodiment, the comparison of the determined distal width $B_T$ with the determined proximal width $A_T$ will indeed indicate a declining gradient of the road surface 201, i.e. the ratio between the distal width $B_T$ and the proximal width $A_T$ is less than 1. However, in this particular scenario, this is not a sign of the road surface 201 declining, but that the right-hand lane 207 is narrowing.

Thus, in this embodiment, the processing unit 102 determines from the perspective-transformed image 203 whether the width of the left-hand road side marking 206 is changing. Thus, at least two widths C, D are determined for the detected road side marking 206 (or any other appropriate road surface width). If the widths C and D are the same, than it can be determined that the determined gradient of the road surface 201 indeed is zero and that the road surface consequently is flat. A corresponding reasoning can be made for a broadening road surface.

In case of e.g. a narrowing lane 207, a driver may be informed visually or audibly thereof, for instance in the form of a warning via a Driver Assistance System such as Active Emergency Braking or Adaptive Cruise Control.

It should be noted that the width of the road surface used to determine the gradient could be road width, lane width, size of one or more road markings, etc., or a combination thereof.

The invention has mainly been described above with reference to a few embodiments. However, as is readily appreciated by a person skilled in the art, other embodiments than the ones disclosed above are equally possible within the scope of the invention, as defined by the appended patent claims.

**Claims**

1.  A method at a vehicle (105) of determining a gradient of a road surface (201) on which the vehicle travels, comprising:

    capturing (S101) at least one image (202) of said road surface;
    transforming (S102) a perspective of the at least one captured image (202);
    detecting (S103) the road surface (201) in the perspective-transformed image (203);
    determining (S104), in the perspective-transformed image (203), a width ($B_T$) of the road surface distal of the vehicle (105) and a width ($A_T$) of the road surface (201) proximate to the vehicle;
    comparing (S105) the detected width ($B_T$) of the road surface (201) distal of the vehicle (105) with the detected width ($A_T$) of the road surface (201) proximate to the vehicle; and
    determining (S106), from the comparison, the gradient of the road surface (201).

2.  The method according to claim 1, further comprising:

    calibrating the perspective-transform performed on the at least one captured image (202) to a known reference gradient of the road surface (201).

3.  The method according to claim 2, wherein the reference gradient corresponds to a flat road surface (201).

4.  The method according to any one of the preceding claims, wherein the perspective- transform performed on the at least one captured image (202) results in the perspective-transformed image (203) being a bird's eye view of the road surface (201).

5.  The method according to any one of the preceding claims, the detecting (S103) of the road surface (201) in the perspective-transformed image (203) being performed by:

detecting road markings (204, 205, 206) applied to the road surface (201).

6. The method according to any one of the preceding claims, further comprising:

determining at least two widths (C, D) of the detected road markings (206) to determine whether the width of a lane (208) of the road surface (201) is non-changing in case of the determined gradient indicating an inclining or declining road surface (201).

7. A system (100) at a vehicle (105) for determining a gradient of a road surface (201) on which the vehicle travels, comprising:

a camera (101) configured to capture at least one image (202) of said road surface;
a processor (102); and
a memory (103) containing instructions (104) executable by the processor, whereby the system is operative to:

transform a perspective of the at least one captured image (202);
detect the road surface in the perspective-transformed image (203);
determine, in the perspective-transformed image (203), a width $(B_T)$ of the road surface (201) distal of the vehicle (105) and a width $(A_T)$ of the road surface (201) proximate to the vehicle;
compare the detected width $(B_T)$ of the road surface (201) distal of the vehicle (105) with the detected width $(A_T)$ of the road surface proximate to the vehicle; and
determine, from the comparison, the gradient of the road surface (201).

8. The system (100) according to claim 7, further being operative to:

calibrate the perspective-transform performed on the at least one captured image (202) to a known reference gradient of the road surface (201).

9. The system (100) according to claim 8, wherein the reference gradient corresponds to a flat road surface (201).

10. The system (100) according to any one of claims 7-9, wherein the perspective- transform performed on the at least one captured image (202) results in the perspective-transformed image (203) being a bird's eye view of the road surface (201).

11. The system (100) according to any one of claims 7-10, further being operative to, when detecting the road surface (201) in the perspective-transformed image (203):

detect road markings (204, 205, 206) applied to the road surface (201).

12. The system (100) according to any one of claims 7-11, further being operative to:

determine at least two widths (C, D) of the detected road markings (206) to determine whether the width of a lane (208) of the road surface (201) is non-changing in case of the determined gradient indicating an inclining or declining road surface (201).

13. A computer program (104) comprising computer-executable instructions for causing a system (100) to perform steps recited in any one of claims 1-6 when the computer-executable instructions are executed on a processing unit (102) included in the system (100).

14. A computer program product comprising a computer readable medium (103), the computer readable medium having the computer program (104) according to claim 13 embodied therein.

Fig. 1

Fig. 2

Fig. 3

Fig. 4

```
┌──────────────┐
│   Capture    │  S101
│    image     │
└──────────────┘
       │
       ▼
┌──────────────┐
│  Transform   │  S102
│ perspective  │
└──────────────┘
       │
       ▼
┌──────────────┐
│ Detect road  │  S103
│   surface    │
└──────────────┘
       │
       ▼
┌──────────────┐
│  Determine   │  S104
│    widths    │
└──────────────┘
       │
       ▼
┌──────────────┐
│   Compare    │  S105
│    widths    │
└──────────────┘
       │
       ▼
┌──────────────┐
│  Determine   │  S106
│   gradient   │
└──────────────┘
```

Fig. 5

Perspective-transformed image,
flat road, narrowing lane

Width $B_T$    203d

206    204

$x$

D
C

201    207

208    Width $A_T$

Fig. 6

Europäisches
Patentamt

European
Patent Office

Office européen
des brevets

# EUROPEAN SEARCH REPORT

Application Number

EP 14 19 4148

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GANG YI JIANG ET AL: "Lane and obstacle detection based on fast inverse perspective mapping algorithm", SYSTEMS, MAN, AND CYBERNETICS, 2000 IEEE INTERNATIONAL CONFERENCE ON NASHVILLE, TN, USA 8-11 OCT. 2000, PISCATAWAY, NJ, USA,IEEE, US, vol. 4, 8 October 2000 (2000-10-08), pages 2969-2974, XP010523611, DOI: 10.1109/ICSMC.2000.884452 ISBN: 978-0-7803-6583-4 * sect.3.1 and 3.2 * | 1-14 | INV. G06K9/00 |
| A | EP 2 731 076 A2 (RICOH CO LTD [JP]) 14 May 2014 (2014-05-14) * figures 12-14 * | 1-14 | |

TECHNICAL FIELDS
SEARCHED (IPC)

G06K

The present search report has been drawn up for all claims

| Place of search | Date of completion of the search | Examiner |
|---|---|---|
| The Hague | 30 March 2015 | Darolti, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 19 4148

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2015

| Patent document cited in search report | | Publication date | Patent family member(s) | | Publication date |
|---|---|---|---|---|---|
| EP 2731076 | A2 | 14-05-2014 | CN | 103810720 A | 21-05-2014 |
| | | | EP | 2731076 A2 | 14-05-2014 |
| | | | JP | 2014115980 A | 26-06-2014 |
| | | | US | 2014133699 A1 | 15-05-2014 |

EPO FORM P0459

For more details about this annex : see Official Journal of the European Patent Office, No. 12/82

**EP 3 023 907 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7898400 B